# FASCICULE DE BREVET EUROPEEN

(11) **EP 1 406 510 B1**
(45) Date de publication et mention de la délivrance du brevet: **31.08.2005**
(21) Numéro de dépôt: 02764985.4
(22) Date de dépôt: 15.07.2002
(51) Int. Cl.: A23J 3/34, A23C 21/02, A21D 2/26

(54) **LACTOSERUM MODIFIE, PROCEDE DE PREPARATION, UTILISATION ET PRODUIT DE PANIFICATION COMPRENANT LE LACTOSERUM MODIFIE**
MODIFIZIERTE MOLKE, VERFAHREN ZUR HERSTELLUNG, VERWENDUNG UND DIE MODIFIZIERTE MOLKE ENTHALTENDES BROTBEREITUNGSPRODUKT
MODIFIED WHEY, METHOD FOR PREPARING SAME, USE AND BREAD-MAKING PRODUCT COMPRISING MODIFIED WHEY

(30) Priorité: 17.07.2001 FR 0109518
(43) Date de publication de la demande: 14.04.2004
(73) Titulaire: COMPAGNIE LAITIERE EUROPEENNE, F-50890 Condé-sur-Vire (FR)
(72) Inventeur: SOUPPE, Jérôme, F-35700 RENNES (FR); PRODHOMME, Joel, F-50410 MARGUERAY (FR)
(74) Mandataire: Corizzi, Valérie
(86) Numéro de dépôt international: PCT/FR2002/002510
(87) Numéro de publication internationale: WO 2003/007731

(56) Documents cités:
- WO-A-99/65326
- GB-A- 2 139 071
- US-A- 4 500 549
- US-A- 5 952 193

## Description

La présente invention concerne un lactosérum modifié, son procédé de préparation, son application dans le domaine des produits de panification et les produits de panification comprenant ledit lactosérum modifié.

Le rassissement du pain est essentiellement dû à la rétrogradation de l'amidon, qui résulte de la formation de liaisons hydrogène entre les groupes hydroxyle des résidus glucose de l'amidon. Ainsi, les produits de panification industriels, tels que les pains de mie, les pains briochés, les génoises, le pain de campagne ou les viennoiseries se durcissent rapidement.

Différentes solutions ont été proposées pour s'affranchir de ce problème :
- la rotation accélérée des produits dans les linéaires, ce qui exige de travailler à flux tendu, avec des contraintes de logistique assez lourdes.
- l'utilisation d'additifs tels que des émulsifiants (monoglycérides distillés, esters d'acide tartrique acétylés (DATA), etc.) ou des rétenteurs d'eau (gomme de guar, xanthanes, etc.). Ces produits doivent être mentionnés dans la liste des ingrédients, ce qui est généralement mal perçu par les consommateurs.
- l'utilisation d'auxiliaires technologiques de nature enzymatique. Le produit le plus efficace à ce jour est une amylase maltogénique et thermostable, produite par NOVO NORDISK et dont le nom commercial est « NOVAMYL® ». Cette enzyme présente un certain nombre d'inconvénients :
   . elle ne permet de retarder le rassissement des produits de panification industrielle que de 8 à 10 jours selon les produits
   . son prix élevé en limite l'utilisation
   . cette enzyme n'est pas active dans la viennoiserie et
   . elle est issue d'un microorganisme génétiquement modifié.

Ce problème de rassissement n'est donc pas, à l'heure actuelle, résolu de manière satisfaisante.

C'est pourquoi la Demanderesse s'est donnée pour but de proposer une solution efficace à ce problème du rassissement des produits de panification industriels.

La Demanderesse a ainsi trouvé, de manière surprenante, une solution à ce problème du rassissement des produits de panification industriels par l'incorporation auxdits produits d'un lactosérum modifié.

Des produits de panification contenant un lactosérum modifié par hydrolyse du lactose avec une lactase, suivie d'une hydrolyse avec des lipases et des protéases sont décrits dans US-A-4 500 549 (T. Crossman).

Le lactosérum est le liquide résiduel obtenu après l'extraction des protéines et de la matière grasse du lait ou du petit-lait. On distingue en général deux catégories de lactosérum, selon que son acidité est inférieure ou supérieure à 1,8 g d'acide lactique/l : le lactosérum doux, issu de la fabrication de fromage à pâte pressée cuite ou non cuite (emmenthal, saint-paulin etc.) et le lactosérum acide, issu des autres fromages obtenus par coagulation mixte ou lactique (pâtes molles, pâtes fraîches). La composition moyenne du lactosérum doux est à titre indicatif, pour 61 g de matières sèches par kg de lactosérum, de 42 à 48 g de lactose, 8 g de protéines, 2 g de graisses, 5 à 7 g de minéraux, 1 à 5 g d'acide lactique et le reste en minéraux et vitamines.

On entend par "lactosérum initial" le lactosérum tel que défini ci-dessus. On préfèrera les lactosérums doux, dans la mesure où ils sont plus faciles à sécher.

La présente invention a donc pour objet un procédé de préparation de lactosérum modifié, caractérisé en ce qu'il comprend les étapes suivantes :
a) délactosage d'un lactosérum initial par évaporation du lactosérum, de manière à cristalliser le lactose sous forme alfamonohydratée, facilement séparable ; de manière préférée, on obtient ainsi un lactosérum concentré comprenant de 55 à 70 % de matière sèche,
b) hydrolyse du lactosérum obtenu à l'étape a) à l'aide de lactases, de préférence à un pH compris entre 3 et 7 et à une température ≤ à 40°C, jusqu'à l'obtention d'un taux de lactose compris entre 10 et 50 % en poids de la quantité de lactose initialement présente dans le lactosérum initial non modifié ; de manière avantageuse, au cours de cette étape le lactose est, en majeure partie, transformé en glucose et en galactose ; de manière préférée on obtient à cette étape b) un taux de lactose de 10 à 35%, de préférence de 35% en poids de la quantité de lactose initialement présente dans le lactosérum initial non modifié.
c) pré-traitement des protéines contenues dans le lactosérum obtenu à l'étape b) par addition audit lactosérum d'un piège à calcium, à chaud et à pH sensiblement neutre,
d) hydrolyse à chaud des protéines pré-traitées à l'étape c) en présence d'au moins une endopeptidase, d'au moins une exopeptidase et d'au moins une molécule capable de couper les ponts disulfures jusqu'à l'obtention d'un taux de protéines totales représentant au maximum 80% en poids du poids initial de protéines présentes dans le lactosérum initial non modifié ; on obtient un taux d'hydrolyse compris, de préférence, entre 20 et 25 %, et
e) inactivation de toutes les enzymes présentes dans le lactosérum obtenu à l'étape d).

De manière préférée :
- le délactosage selon l'étape a), est effectué conformément aux techniques bien connues de l'homme du métier et comprend de préférence une concentration par évaporation, suivie d'un séchage.
- l'hydrolyse selon l'étape b) est effectuée en présence d'une lactase acide qui présente une activité optimale à un pH compris entre 3 et 5, de préférence à un pH de 4 ou d'une lactase neutre, qui présente une activité optimale à un pH compris entre 5 et 7, de préférence à un pH de 6,3, de préférence à 37°C ; également de manière préférée, la quantité de lactase est de 0,1 à 0,5 g pour 100 g d'extrait sec (ou matière sèche). L'hydrolyse du lactose est avantageusement poursuivie jusqu'à l'obtention d'un taux d'hydrolyse du lactose d'au moins 50% et de préférence de 65 à 90 % : on obtient ainsi un taux de lactose de 10 à 35%, de préférence de 35% de la quantité de lactose initialement présente dans le lactosérum non modifié. Le taux d'hydrolyse est mesuré par dosage des sucres libres, et notamment du glucose par glucométrie.
- le pré-traitement des protéines selon l'étape c) est, de préférence, effectué à une température comprise entre 40° et 50°C et à un pH compris entre 6,5 et 7,5, de préférence à pH 7. A cette étape, le piège à calcium, de préférence présent en une quantité de 1 % d'extrait sec, est sélectionné dans le groupe constitué par le citrate disodique, le lactate de sodium et certains polyphosphates.
- l'hydrolyse des protéines selon l'étape d) est avantageusement effectuée à une température comprise entre 35° et 60°C, de préférence 45°C, en présence :
   . d'une endopeptidase sélectionnée dans le groupe constitué par une neutrase, notamment la neutrase commercialisée par NOVO, la pancréatine, la delvolase ou protéase alcaline issue de *Bacillus licheniformis*, la papaïne ou protéase V 100 et une protéase neutre du genre *Aspergillus (niger, oryzae, sojae, melleus ou wentii*.
   . d'une exopeptidase fongique, de préférence du genre *Aspergillus (niger, oryzae, sojae, melleus, wentii)* et
   . d'une molécule capable de couper les ponts disulfures, sélectionnée dans le groupe constitué par le métabisulfite de sodium, la cystéine ou un extrait de levure riche en glutathion. Le métabisulfite de sodium détruit la structure tertiaire des protéines ; en outre, il permet de maintenir un potentiel rédox dans le milieu, nécessaire par exemple à l'activité de la papaïne. Le taux d'hydrolyse des protéines est mesuré par dosage des groupements NH₂ ou COOH libérés.
- l'inactivation de toutes les enzymes à l'étape e) est mise en oeuvre dans la mesure où pour que les enzymes soient considérées comme des auxiliaires technologiques, conformément à la réglementation, elles doivent être inactives.

Selon un mode de mise en oeuvre avantageux dudit procédé, la température et la durée de l'étape e) est fonction du cocktail enzymatique utilisé ; les conditions sont notamment de 90°C pendant 30 minutes.

Le procédé de préparation du lactosérum modifié selon l'invention peut comprendre une ou des étapes complémentaires permettant de concentrer le lactosérum modifié obtenu à l'étape e).

Selon un autre mode de mise en oeuvre avantageux du procédé de préparation du lactosérum, il comprend une étape supplémentaire f) de concentration du lactosérum modifié obtenu à l'étape e) pour obtenir un concentré à 50-60% d'extrait sec, de préférence à 55%.

La présente invention a également pour objet un lactosérum modifié, susceptible d'être obtenu par le procédé décrit ci-dessus et caractérisé en ce qu'il comprend une quantité de lactose comprise entre 10 et 50% en poids de la quantité pondérale initialement présente et une quantité de protéines représentant au maximum 80% en poids la quantité pondérale de protéines initialement présentes.

Le lactosérum modifié selon l'invention peut se présenter sous forme liquide, sous forme de concentré ou de poudre sèche.

On préfèrera, pour des raisons de coût de transport le lactosérum sous forme de concentré à 50 à 70% d'extrait sec, de préférence à 55% d'extrait sec.

Ce lactosérum modifié selon l'invention présente les avantages suivants :
- il permet de ralentir, de manière significative, le rassissement des produits industriels de panification le contenant par rapport aux produits de panification ne le contenant pas.
- le lactosérum modifié selon l'invention, ajouté aux produits de panification précités permet de réduire jusqu'à 10 fois la dose de NOVAMYL® dans la farine, voire d'éviter l'ajout de NOVAMYL® dans la farine ; dans ce dernier cas, pour un résultat au moins aussi bon en terme de ralentissement du rassissement des produits de panification ; cela constitue une intéressante réduction du coût pour l'industriel de la panification, puisque ces produits ne contiennent pas une quantité importante d'ingrédients coûteux ;
- il permet en outre une bonne valorisation du lactosérum délactosé pour le fabriquant de lactose.

De façon surprenante, la Demanderesse a également constaté que l'emploi d'un lactosérum selon l'invention permettait d'obtenir les avantages suivants dans la préparation d'un produit de panification :
- obtention d'une pâte de panification dotée d'un lissage amélioré, toutes choses étant égales par ailleurs. Les pâtes de l'art antérieur présentent souvent un caractère élastique qui rend leur manipulation difficile, en particulier dans une installation industrielle. Les pâtes comportant le lactosérum selon l'invention sont plus faciles à étirer, malaxer, lisser.
- Obtention d'un produit de panification plus moelleux que ceux de l'art antérieur, toutes choses étant égales par ailleurs. Le moelleux est un critère d'appréciation auquel est très sensible le consommateur. Il s'apprécie à la fois au toucher et au palais. Des tests d'analyse sensorielle faits sur les produits de panification comprenant le lactosérum selon l'invention, comparativement à des produits ne le comprenant pas, ont montré la supériorité des produits de panification selon l'invention par rapport à ceux de l'art antérieur au regard de ce critère.
- obtention d'un produit de panification doté d'une meilleure capacité de rétention d'eau, toutes choses étant égales par ailleurs. Cette propriété se traduit pour le consommateur par un dessèchement moins rapide du produit de panification, notamment lorsqu'il est exposé à l'air.
- possibilité de préparer une pâte exempte d'agents émulsifiants habituels. Il est donc possible de préparer un produit de panification à partir d'une pâte comportant comme seul agent émulsifiant le lactosérum selon l'invention.

Selon un mode de réalisation avantageux dudit lactosérum modifié, il comprend de préférence une quantité de lactose représentant 35% en poids de la quantité initialement présente dans le lactosérum initial non modifié.

On verra dans les exemples qui suivent que ces quantités de lactose et de protéines totales restantes dans le lactosérum modifié de l'invention sont des caractéristiques qui permettent d'apporter un ralentissement du rassissement des produits de panification contenant ledit lactosérum.

La présente invention a également pour objet l'utilisation du lactosérum modifié de l'invention en tant qu'améliorant de panification. On utilise effectivement le lactosérum modifié de l'invention pour fabriquer notamment des pains industriels qui présentent un rassissement ralenti en comparaison de pains industriels qui ne comprennent pas le lactosérum modifié selon l'invention.

On ajoute, de préférence, des quantités de 0,1 à 0,6%, de préférence de 0,2 à 0,6% de lactosérum modifié par rapport à la quantité de farine (p/p), de préférence de 0,4%.

La présente invention a en outre pour objet un produit de panification comprenant du lactosérum modifié selon l'invention. Ledit produit de panification est avantageusement du pain de mie, une génoise, un pain avec poolish ou un pain de type hamburger.

Selon un mode de réalisation avantageux dudit produit de panification, il comprend en outre au moins l'un des additifs suivants : farine de lupin, amylase ou tout produit issu du fractionnement de la matière grasse laitière, notamment cholestérol ou rétentat d'utltrafiltration de babeurre.

De manière avantageuse :
- des pains de type hamburger et des pains de mie avec poolish comprendront outre du lactosérum modifié selon l'invention, de la farine de lupin et une amylase
- des pains de mie avec poolish comprendront avantageusement en outre du cholestérol ou un rétentat de babeurre caractérisé par un extrait sec d'environ 17 %, une teneur en matière protéique d'environ 75 % par rapport à l'extrait sec, et une teneur en matières grasses d'environ 10 % par rapport à l'extrait sec.

L'invention sera mieux comprise à l'aide du complément de description qui suit qui sont des exemples de préparation du lactosérum modifié conforme à l'invention et des études comparatives du rassissement de pains différents, ainsi qu'à la planche des dessins annexée dans lesquels :

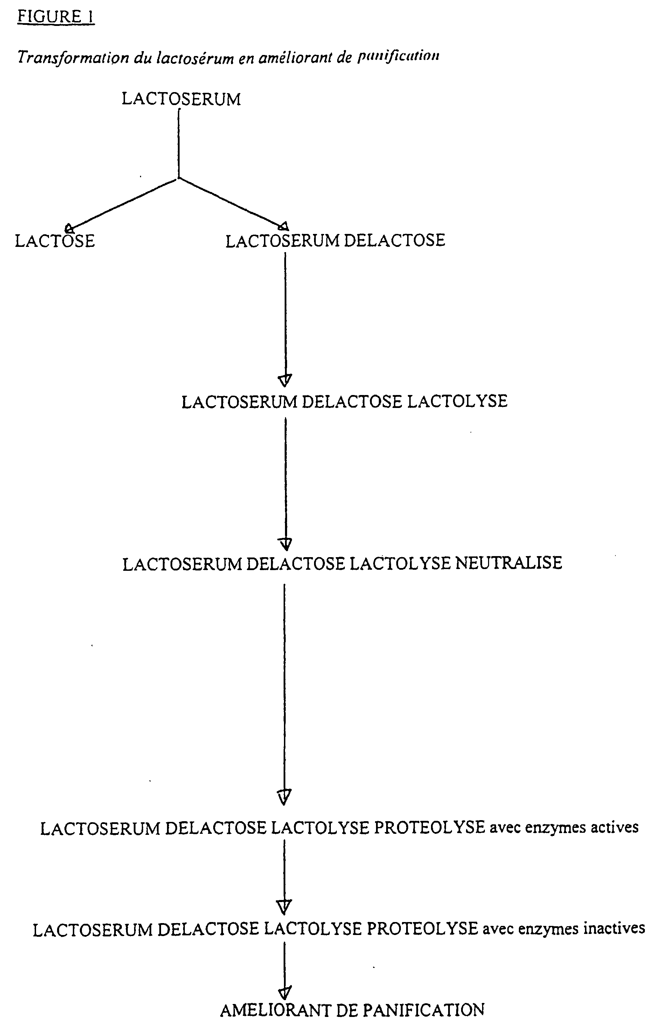

- La figure 1 illustre le procédé général selon l'invention.

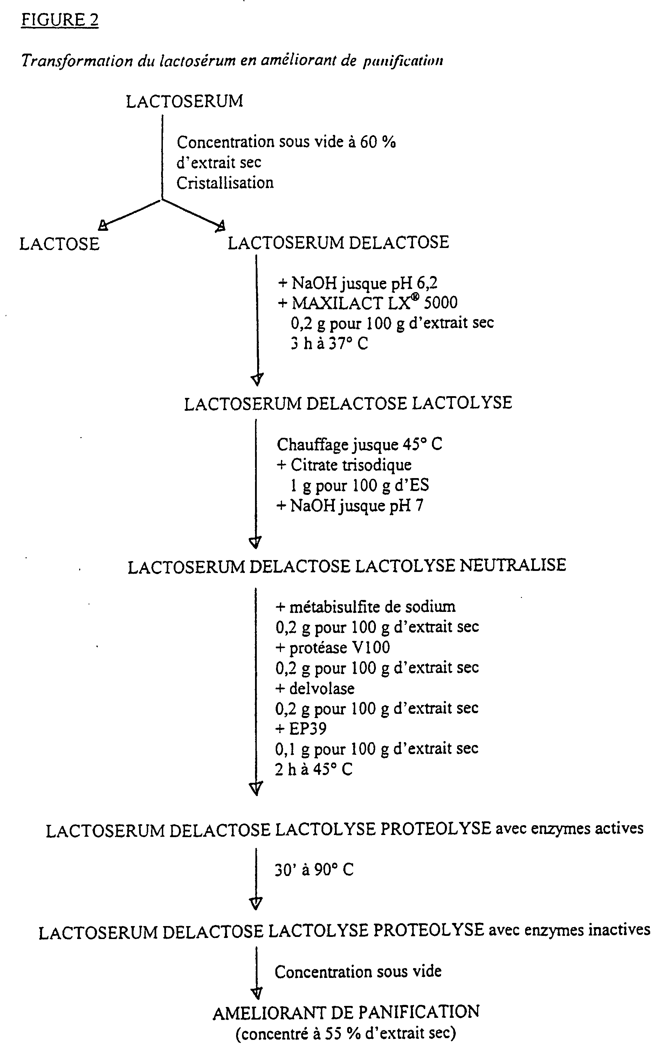

- La figure 2 illustre un mode de mise en oeuvre préféré du procédé selon l'invention.

### EXEMPLE 1 : Procédé de préparation de lactosérum modifié

### a) Délactosage du lactosérum :

Le lactosérum est solubilisé en chauffant à 60-70°C une solution de lactosérum, puis concentré sous vide à 60% d'extrait sec, et refroidi doucement jusqu'à 4°C (en 48-72 h) pour obtenir un produit cristallisé qui permet de séparer le lactose cristallisé du lactosérum délactosé.

### b) Hydrolyse du lactosérum obtenu à l'étape a):

On met en solution 20 Kg de poudre de lactosérum délactosé obtenu à l'étape a) et contenant 26% de matière azotée dans 46 litres d'eau à 60°C. La solution est stérilisée par un chauffage de 30 minutes à 90°C puis refroidie à 37°C et neutralisée à pH 6,4 par ajout de soude à 30%. On ajoute 40 g de lactase (MAXILACT® LX 5000 commercialisée par DSM) à la solution pour laisser la réaction s'effectuer pendant 3h.

### c) pré-traitement des protéines:

La température du milieu est alors portée à 45°C et 200 g de citrate trisodique sont ajoutés. Le pH est enfin ajusté à 7 avec de la soude à 30%.

### d) Hydrolyse des protéines :

On ajoute 40 g de métabisulfite de sodium, 40 g de papaïne (PROTEASE® V100 commercialisée par DSM), 40 g de protéase alcaline de *Bacillus licheniformis* (DELVOLASE® commercialisée par DSM) et 20 g de protéase fongique (Protéase M "Amano" commercialisée par UNIPEX) au milieu réactionnel pour effectuer une hydrolyse pendant 2 h à 45°C.

### e) Inactivation des enzymes:

En fin de réaction, la température est portée à 90°C pendant 30 minutes.

### f) Concentration du lactosérum modifié

Le milieu est refroidi à 4°C avant d'être concentré par évaporation sous vide jusqu'à un extrait sec de 55%.

### EXEMPLE 2 : Pains de mie

Le produit obtenu à l'exemple 1 est utilisé dans une recette de pain de mie en comparaison du NOVAMYL® et d'un témoin sans auxiliaire technologique :

| | TEMOIN | Essai avec Novamyl® seul | Essai Novamyl® et lactosérum modifié |
|---|---|---|---|
| Farine (g) | 500 | 500 | 500 |
| Eau (g) | 250 | 250 | 250 |
| Beurre (g) | 100 | 100 | 100 |
| Levure (g) | 25 | 25 | 25 |
| Sucre (g) | 20 | 20 | 20 |
| Sel (g) | 6 | 6 | 6 |
| Novamyl® (mg) | 0 | 20 | 2 |
| Lactosérum modifié concentré (g d'extrait sec) | 0 | 0 | 4 |

La recette inclut également un oeuf pour 500 g de farine.

Afin d'éviter le développement de moisissures, 2,5 g de propionate de calcium sont ajoutés pour 500 g de farine.

Chaque pain est fabriqué à partir de 400 g de pâte mise en moule pour 40 minutes de pousse à 35°C suivie d'une cuisson de 25 minutes à 230°C dans un four à sol. Après cuisson, les pains sont mis à refroidir quelques heures à température ambiante avant d'être emballés sous plastique.

La dégustation des produits en aveugle par une assemblée de 10 dégustateurs après 8 et 15 jours de conservation sous plastique à température ordinaire a montré que le témoin était jugé très rassis alors que le pain de mie selon l'invention avait conservé son moelleux encore mieux que le pain de mie ne contenant que du Novamyl®.

### EXEMPLE 3 : Génoises

Le lactosérum modifié conforme à l'invention dont la fabrication est décrite dans l'exemple 1 est incorporé lors de la préparation d'une génoise : 8 oeufs sont mélangés à 250 g de sucre dans un bol à 30°C. Le mélange est fouetté pendant 10 minutes à vitesse 3 puis pendant 10 minutes à vitesse 2 jusqu'à obtention d'un ruban. 250 g de farine sont alors ajoutés délicatement et l'ensemble est mis en moule et enfourné à une température de 190°C aussitôt dans un four à sol pour 30 minutes de cuisson.

Différentes génoises ont été réalisées se différenciant par l'ajout des ingrédients suivants à la dose de 20 g par kg de farine :

| | Ingrédients |
|---|---|
| TEMOIN | Aucun |
| Essai 1 | Lactose |
| Essai 2 | Lactosérum non modifié |
| Essai 3 | Lactosérum délactosé |
| Essai 4 | Lactosérum modifié (exemple 1) conformément à l'invention |

Après 13 jours de conservation, les produits étaient identiques quant à leur goût mais se différenciaient par leur aspect moelleux dans l'ordre décroissant suivant :
Essai 4 > Essai 3 = Essai 2 = Essai 1 > Témoin

Après 20 jours de conservation, le produit issu de l'essai 4 restait toujours le plus moelleux.

### EXEMPLE 4 : Pains de type Hamburger

Des pains de type Hamburger ont été fabriqués selon la recette suivante :
Farine de blé : 2000 g
Eau : 1160 g
Levure : 100 g
Sucre : 60 g
Beurre : 60 g
Sel : 40 g
Farine de soja : 10 g

L'ensemble est pétri pendant 20 minutes à vitesse maximale dans un batteur HOBBART avec queue de cochon. La pâte est divisée en pâtons de 110 g et mise en moule à 25°C pour 1 heure d'apprêt (période de repos de la pâte qui précède la cuisson ; pendant cette période a lieu la fermentation panaire). Les pâtons sont enfin cuits à 240°C pendant 12 minutes.

Les essais suivants réalisés se différencient par des incorporations d'ingrédients susceptibles de ralentir le rassissement du produit :

| mg d'extrait sec/ Kg de farine | TEMOIN | Essai 1 | Essai 2 |
|---|---|---|---|
| NOVAMYL® | 0 | 40 | 4 |
| Lactosérum modifié 0 de l'exemple 1 | | 0 | 4000 |

Au 11^{ème} jour de conservation, les pains hamburgers ont été examinés en aveugle par un jury de 6 personnes ayant à attribuer une note entre 1 (rassis) et 7 (très moelleux) aux différents produits. Le total des notes obtenu fut :
Témoin : 11
Essai 1 : 29
Essai 2 : 33

Il apparaît donc avantageux de substituer la majeure partie du Novamyl® que l'on peut incorporer dans des produits de panification industriels.

### EXEMPLE 5 : Pains de mie avec poolish

Des pains de mie avec poolish ont été réalisés selon la recette suivante :
*Poolish (farine hydratée comprenant de la levure)*
   Poolish:
   Farine de gruau : 750 g
   Eau : 600 g
   Levure : 3,7 g
   Laissée fermenter 16 h à 20°C.
*Préparation du pain de mie*
   Poolish : 1353,7 g
   Farine de gruau : 1500 g
   Eau : 818 g
   Saindoux : 225 g
   Levure : 86 g
   Sucre : 67 g
   Sel : 45 g
   Farine de soja : 33,8 g
   Propionate de calcium : 3,4 g

Les pâtes obtenues sont mises en bac pour 1 h de pointage : période de repos de la pâte qui suit le pétrissage et permet une première étape de fermentation de la levure et de structuration de la pâte ; des pâtons de 400 g sont pesés et légèrement boulés pour une détente de 15 minutes. Ils sont ensuite mis en moule pour 1,5 h d'apprêt à 25°C et pour obtenir 85% d'humidité relative. La cuisson est enfin réalisée en moule ouvert à 230°C pendant 25 minutes. Le démoulage a lieu juste après la cuisson pour un ressuage de 3h.

Les essais suivants se différencient des précédents par l'incorporation dans la partie hors poolish d'ingrédients susceptibles de ralentir le rassissement du pain.

| mg d'extrait sec/kg de farine | TEMOIN | Essai 1 | Essai 2 |
|---|---|---|---|
| NOVAMYL® | 0 | 40 | 4 |
| Lactosérum modifié de l'exemple 1 | 0 | 0 | 4000 |

Le sérum modifié est celui décrit à l'exemple 1.

Après 18 jours de conservation, le témoin était totalement rassis alors que les pains de l'essai 2 et de l'essai 1 avaient conservé tout leur moelleux.

### EXEMPLE 6 : Pains de type Hamburger

Des pains de type Hamburger ont été fabriqués comme décrit à l'exemple 4.

Les essais suivants ont été réalisés qui se différencient par l'incorporation d'ingrédients susceptibles de ralentir le rassissement du produit :

| mg d'extrait sec/ Kg de farine | TEMOIN | Essai 1 | Essai 2 |
|---|---|---|---|
| NOVAMYL® | 0 | 40 | 0 |
| Lactosérum modifié de l'exemple 1 | 0 | 0 | 4000 |
| Farine de lupin | 0 | 0 | 3000 |
| BREWERS AMYLIQ® | 0 | 0 | 0,05 |

BREWERS AMYLIQ® est une amylase bactérienne issue *de Bacillus amyloliquefaciens* et commercialisée par DSM France.

Au 17^{ème} jour de conservation, les pains hamburgers ont été examinés en aveugle par un jury de 6 personnes ayant à attribuer une note entre 1 (rassis) et 7 (très moelleux) aux différents produits. Le total des notes obtenues fut :
Témoin : 11
Essai 1 : 30
Essai 2 : 22

Il apparaît donc possible de ralentir le rassissement de pain type Hamburger par une formulation exempte de NOVAMYL® mais contenant par contre du lactosérum modifié tel que décrit dans la présente invention.

### EXEMPLE 7 : Pains de mie avec poolish

Des pains de mie avec poolish ont été fabriqués comme décrit à l'exemple 5. Les essais suivants ont été réalisés qui se différencient par l'incorporation d'ingrédients susceptibles de ralentir le rassissement du produit :

| mg d'extrait sec/ Kg de farine | TEMOIN | Essai 1 | Essai 2 |
|---|---|---|---|
| NOVAMYL® | 0 | 40 | 0 |
| Lactosérum modifié de l'exemple 1 | 0 | 0 | 4000 |
| Farine de lupin | 0 | 0 | 3000 |
| BREWERS AMYLIQ® | 0 | 0 | 0,05 |

Au 14^{ème} jour de conservation, les pains ont été examinés en aveugle par un jury de 6 personnes ayant à attribuer une note entre 1 (rassis) et 7 (très moelleux) aux différents produits. Le total des notes obtenues fut :
Témoin : 12
Essai 1 : 35
Essai 2 : 26

Il apparaît donc possible de ralentir le rassissement de ce type de pain par une formulation exempte de NOVAMYL® mais comprenant par contre du lactosérum modifié conformément à l'invention.

### EXEMPLE 8 : Pains de mie avec poolish

Des pains de mie avec poolish ont été fabriqués comme décrit à l'exemple 5. Les essais suivants ont été réalisés qui se différencient par l'incorporation d'ingrédients susceptibles de ralentir le rassissement du produit.

| mg d'extrait sec/ Kg de farine | TEMOIN | Essai 1 | Essai 2 | Essai 3 | Essai 4 | Essai 5 |
|---|---|---|---|---|---|---|
| NOVAMYL® | 0 | 40 | 0 | 0 | 0 | 0 |
| Lactosérum modifié selon l'exemple 1 | 0 | 0 | 4000 | 4000 | 4000 | 4000 |
| Farine de lupin | 0 | 0 | 3000 | 3000 | 3000 | 3000 |
| BREWERS AMYLIQ® | 0 | 0 | 0,05 | 0,05 | 0,05 | 0,05 |
| Cholestérol | 0 | 0 | 0 | 1000 | 5000 | 20000 |

Le cholestérol est extrait du lait et commercialisé par la société CORMAN (Belgique).

Au 7^{ème} jour de conservation, les pains ont été examinés en aveugle par un jury de 6 personnes ayant à attribuer une note entre 1 (rassis) et 7 (très moelleux) aux différents produits. Le total des notes obtenues fut :
Témoin : 20
Essai 1 : 22
Essai 2 : 17
Essai 3 : 23
Essai 4 : 27
Essai 5 : 8

Il apparaît donc possible de ralentir le rassissement de ce type de pain par une formulation exempte de NOVAMYL®, optimisée en cholestérol (entre 1 et 5 g par kg de farine) mais comprenant par contre du lactosérum modifié conformément à l'invention.

### EXEMPLE 9 : Pains de mie avec poolish

Des pains de mie avec poolish ont été fabriqués comme décrit à l'exemple 5. Les essais suivants ont été réalisés qui se différencient par l'incorporation d'ingrédients susceptibles de ralentir le rassissement du produit :

| mg d'extrait sec/ Kg de farine | TEMOIN | Essai 1 | Essai 2 | Essai 3 | Essai 4 | Essai 5 |
|---|---|---|---|---|---|---|
| NOVAMYL® | 0 | 40 | 0 | 0 | 0 | 0 |
| Sérum modifié de l'exemple 1 | 0 | 0 | 5000 | 5000 | 5000 | 5000 |
| METARIN CP® | 0 | 0 | 40 | 0 | 40 | 0 |
| BREWERS AMYLIQ® | 0 | 0 | 0,2 | 0 | 0 | 0,2 |
| Rétentat UF/DF de babeurre | 0 | 0 | 0 | 4000 | 0% | 4000 |

Le rétentat UF/DF de babeurre est obtenu à partir de babeurre doux pasteurisé et ultrafiltré à 54°C sur une installation d'ultrafiltration ORELIS® équipée de membranes de seuil de coupure 10 kD en effectuant un facteur de concentration volumique de 5,7, suivi d'une diafiltration pour atteindre un facteur de concentration volumique final de 7,2. Le rétentat obtenu est caractérisé par un extrait sec de 17,4%, une teneur en matière protéique de 75% sur extrait sec, une teneur en matière grasse de 9% sur extrait sec.

Au 17^{ème} jour de conservation, les pains ont été examinés quant au nombre de tranches moelleuses, au numéro de la tranche à partir de laquelle le moelleux est perceptible, et le classement des tranches centrales par intensité de moelleux. Il en est résulté le classement suivant :
Essai 3 > Essai 2 > Essai 1 > Témoin > Essai 5 > Essai 4

Il apparaît donc possible de ralentir le rassissement de ce type de pain par une formulation exempte de NOVAMYL®, mais comprenant par contre du lactosérum modifié conformément à l'invention et supplémenté en émulsifiants d'origines diverses.

### EXEMPLE 10 : Effet du lactosérum selon l'invention sur la capacité de rétention d'eau et le moelleux.

La capacité du sérum, modifié selon l'invention, à retenir l'eau et par conséquent à hydrater davantage au pétrin est démontrée dans l'exemple suivant :

| **ESSAI** | **EAU** | **FARINE** | **SERUM MODIFIE** |
|---|---|---|---|
| 1 | 204 g | 375 g | 0 g |
| 2 | 230 g | 350 g | 1,8g |

L'hydratation au pétrin est augmentée de 54,4 à 65,7% en présence de 0,5% de sérum modifié selon l'invention pour conduire à des pains de mie ayant les humidités suivantes :

| **ESSAI** | **HUMIDITE** | | |
|---|---|---|---|
| | **Sortie du four** | **A 8 jours** | **A 15 jours** |
| 1 | 20,2% | 18,5% | 17,5% |
| 2 | 21,9% | 20,2% | 19,1% |

et un moelleux jugé meilleur pour l'essai 2 que pour l'essai 1. Cela représente une économie de farine de 6,5% pour fabriquer un produit fini jugé meilleur.

### EXEMPLE 11 : Effet du lactosérum modifié selon l'invention sur le lissage des pâtes.

La capacité du sérum, modifié selon l'invention, à lisser les pâtes est démontrée par l'effet du produit à l'alvéographe CHOPIN sur une farine panifiable :

| | **P** | **G** | **W** | **P/L** |
|---|---|---|---|---|
| FARINE TEMOIN | 60 | 26,0 | 222 | 0,44 |
| TEMOIN + 1% de sérum modifié selon l'invention | 50 | 28,1 | 175 | 0,32 |

Les paramètres P, G, W et L mesurés selon la norme NF iso 5530-4 traduisent les effets suivants sur la pâte :
P représente la pression maximale d'une bulle d'air contenue dans la pâte,
G représente le gonflement de la pâte et traduit son extensibilité,
W représente le travail de résistance de la pâte à la déformation.
L est défini par G = 2,22√L

L'évolution des paramètres P et W (à la baisse), G (à la hausse) est typique d'un effet d'assouplissement de pâte tel qu'obtenu couramment avec des ingrédients tels que levures désactivées, cystéine ou métabisulfite.

### EXEMPLE 12 : Substitution d'émulsifiant par le lactosérum associé à une matière grasse.

Le sérum, modifié selon l'invention et associé à un babeurre (BAEF commercialisé par la société CORMAN (Belgique)) a été introduit avec un améliorant de panification comprenant de la farine de fève (5 g par kg de farine), l'émulsifiant E471 (3,5 g par kg de farine), amylases et hémicellulases fongiques (0,15 g par kg de farine) et de l'acide ascorbique (0,1 g par kg de farine) contenant ou non l'émulsifiant E481 des formules d'améliorant :

| **ESSAI** | **E481** | **Sérum modifié selon l'invention** | **BAEF** |
|---|---|---|---|
| 1 | 1,5 g | 7 g | 1,4 g |
| 2 | 0 | 7 g | 1,4g |

| **ESSAI** | **FERMETE** | |
|---|---|---|
| | A 7 jours | A 14 jours |
| 1 | 547 | 796 |
| 2 | 563 | 720 |

La mesure de fermeté, déterminée au pénétromètre STEVENS est donnée en Newtons.

Les résultats montrent que l'utilisation du sérum modifié selon l'invention en association avec du babeurre permet avantageusement de se passer de l'émulsifiant E481 couramment employé en pain de mie industriel pour ralentir l'augmentation de fermeté des pains de mie dans les 10 premiers jours de conservation.

## Revendications

1. Procédé de préparation d'un lactosérum modifié, **caractérisé en ce qu'**il comprend les étapes suivantes :
a) délactosage d'un lactosérum initial par évaporation du lactosérum, de manière à cristalliser le lactose et à obtenir un lactosérum concentré comprenant de 55 à 70 % de matière sèche,
b) hydrolyse du lactosérum obtenu à l'étape a) à l'aide de lactases, de préférence à un pH compris entre 3 et 7 et à une température ≤ à 40°C, jusqu'à l'obtention d'un taux de lactose compris entre 10 et 50 % en poids de la quantité de lactose initialement présente dans le lactosérum initial non modifié,
c) pré-traitement des protéines contenues dans le lactosérum obtenu à l'étape b) par addition audit lactosérum d'un piège à calcium, à chaud et à pH sensiblement neutre,
d) hydrolyse à chaud des protéines pré-traitées à l'étape c) en présence d'au moins une endopeptidase, d'au moins une exopeptidase et d'au moins une molécule capable de couper les ponts disulfures jusqu'à l'obtention d'un taux de protéines totales représentant au maximum 80% en poids du poids initial de protéines présentes dans le lactosérum initial non modifié, et
e) inactivation de toutes les enzymes présentes dans le lactosérum obtenu à l'étape d).

2. Procédé selon la revendication 1, **caractérisé en ce que** l'hydrolyse selon l'étape b) est effectuée, de préférence à 37°C , en présence d'une lactase acide qui présente une activité optimale à un pH compris entre 3 et 5, de préférence à un pH de 4 ou d'une lactase neutre, qui présente une activité optimale à un pH compris entre 5 et 7, de préférence à un pH de 6,3.

3. Procédé selon la revendication 2, **caractérisé en ce que** la quantité de lactase est de 0,1 à 0,5 g pour 100 g de matière sèche.

4. Procédé selon l'une quelconque des revendications 1 à 3, **caractérisé en ce que** le pré-traitement des protéines selon l'étape c) est, de préférence, effectué à une température comprise entre 40° et 50°C et à un pH compris entre 6,5 et 7,5, de préférence à pH 7.

5. Procédé selon l'une quelconque des revendications 1 à 4, **caractérisé en ce que** le piège à calcium selon l'étape c), présent de préférence en une quantité de 1 % d'extrait sec, est sélectionné dans le groupe constitué par le citrate disodique, le lactate de sodium et certains polyphosphates.

6. Procédé selon l'une quelconque des revendications 1 à 5, **caractérisé en ce que** l'hydrolyse des protéines selon l'étape d) est avantageusement effectuée à une température comprise entre 35° et 60°C, de préférence 45°C, en présence :
. d'une endopeptidase sélectionnée dans le groupe constitué par une neutrase, la pancréatine, la delvolase ou protéase alcaline issue de *Bacillus licheniformis*, la papaïne ou protéase V100 et une protéase neutre fongique du genre *Aspergillus (niger, oryzae, sojae, melleus, wentii)*.
. d'une exopeptidase du genre *Aspergillus (niger, oryzae, sojae, melleus ou wentii)*.
. d'une molécule capable de couper les ponts disulfures, sélectionnée dans le groupe constitué par le métabisulfite de sodium, la cystéine ou un extrait de levure riche en glutathion.

7. Procédé selon l'une quelconque des revendications 1 à 6, **caractérisé en ce que** la température et la durée de l'étape e) sont avantageusement de 90°C pendant 30 minutes.

8. Procédé selon l'une quelconque des revendications 1 à 7, **caractérisé en ce qu'**il comprend une étape supplémentaire f) de concentration du lactosérum modifié obtenu à l'étape e) pour obtenir un concentré à 50-60% d'extrait sec, de préférence à 55%.

9. Lactosérum modifié susceptible d'être obtenu à l'aide d'un procédé selon l'une quelconque des revendications 1 à 8, **caractérisé en ce qu'**il comprend une quantité de lactose comprise entre 10 et 50 % en poids de la quantité pondérale initialement présente et une quantité de protéines totales représentant au maximum 80% en poids de la quantité pondérale de protéines initialement présentes.

10. Lactosérum modifié selon la revendication 9, **caractérisé en ce qu'**il se présente sous forme liquide, sous forme de concentré ou de poudre sèche.

11. Lactosérum modifié selon la revendication 9 ou la revendication 10, **caractérisé en ce qu'**il se présente sous forme de concentré. à 50-70% d'extrait sec.

12. Lactosérum modifié selon l'une quelconque des revendications 9 à 11, **caractérisé en ce qu'**il comprend une quantité de lactose de 35% en poids du lactose initial présent dans le lactosérum initial non modifié.

13. Utilisation du lactosérum modifié selon l'une quelconque des revendications 9 à 12 en tant qu'améliorant de panification.

14. Utilisation d'un lactosérum modifié selon l'une quelconque des revendications 9 à 12 pour la préparation d'une pâte de panification dotée d'un lissage amélioré.

15. Utilisation d'un lactosérum modifié selon l'une quelconque des revendications 9 à 12 pour la préparation d'un produit de panification doté d'un moelleux amélioré.

16. Utilisation d'un lactosérum modifié selon l'une quelconque des revendications 9 à 12 pour la préparation d'un produit de panification doté d'une capacité de rétention d'eau améliorée.

17. Produit de panification industriel comprenant du lactosérum modifié selon l'une quelconque des revendications 9 à 12 en une quantité de 0,1 à 0,6% en poids par rapport à la quantité de farine.

18. Produit de panification selon la revendication 17, **caractérisé en ce qu'**il comprend en outre au moins l'un des additifs suivants : farine de lupin, amylase ou tout produit issu du fractionnement de la matière grasse laitière, notamment cholestérol ou rétentat d'ultrafiltration de babeurre.

19. Produit de panification selon la revendication 17 ou la revendication 18, **caractérisé en ce qu'**il est exempt de tout autre agent émulsifiant.

## Patentansprüche

1. Verfahren zur Herstellung einer modifizierten Molke, **dadurch gekennzeichnet, dass** es die folgenden Schritte umfasst:
a) Entfernen von Lactose aus einer Ausgangsmolke durch Eindampfen der Molke zur Kristallisierung der Lactose und zum Erhalt einer konzentrierten Molke, die 55 bis 70% Trockenmasse umfasst,
b) Hydrolyse der in Schritt a) erhaltenen Molke mit Hilfe von Lactasen, vorzugsweise bei einem pH zwischen 3 und 7 und bei einer Temperatur ≤ 40°C, bis zum Erhalt eines Lactosegehalts von 10 bis 50 Gew.-% der anfangs in der nicht-modifizierten Ausgangsmolke vorhandenen Lactosemenge,
c) Vorbehandlung der in der in Schritt b) erhaltenen Molke enthaltenen Proteine, indem der Molke in der Wärme und bei etwa neutralem pH ein Calciumfänger zugesetzt wird,
d) Hydrolyse der in Schritt c) vorbehandelten Proteine in der Wärme in Gegenwart wenigstens einer Endopeptidase, wenigstens einer Exopeptidase und wenigstens eines Moleküls, das in der Lage ist, Disulfidbrücken zu spalten, bis ein Gesamtproteingehalt erhalten wird, der höchstens 80 Gew.-% des Anfangsgewichts der in der nicht-modifizierten Ausgangsmolke vorhandenen Proteine darstellt, und
e) Inaktivierung aller Enzyme, die in der in Schritt d) erhaltenen Molke vorhanden sind.

2. Verfahren gemäß Anspruch 1, **dadurch gekennzeichnet, dass** die Hydrolyse gemäß Schritt b), vorzugsweise bei 37°C, in Gegenwart einer sauren Lactase, die bei einem pH zwischen 3 und 5, vorzugsweise einem pH von 4, eine optimale Aktivität aufweist, oder einer neutralen Lactase, die bei einem pH zwischen 5 und 7, vorzugsweise einem pH von 6,3, eine optimale Aktivität aufweist, erfolgt.

3. Verfahren gemäß Anspruch 2, **dadurch gekennzeichnet, dass** die Lactasemenge 0,1 bis 0,5 g je 100 g Trockenmasse beträgt.

4. Verfahren gemäß einem der Ansprüche 1 bis 3, **dadurch gekennzeichnet, dass** die Vorbehandlung der Proteine gemäß Schritt c) vorzugsweise bei einer Temperatur zwischen 40 und 50°C und bei einem pH zwischen 6,5 und 7,5, vorzugsweise einem pH von 7 durchgeführt wird.

5. Verfahren gemäß einem der Ansprüche 1 bis 4, **dadurch gekennzeichnet, dass** der Calciumfänger gemäß Schritt c), der vorzugsweise in einer Menge von 1% Trockenextrakt vorliegt, ausgewählt ist aus der Gruppe bestehend aus Dinatriumcitrat, Natriumlactat und bestimmten Polyphosphaten.

6. Verfahren gemäß einem der Ansprüche 1 bis 5, **dadurch gekennzeichnet, dass** die Hydrolyse der Proteine gemäß Schritt d) vorteilhaft bei einer Temperatur von 35 bis 60°C, vorzugsweise einer Temperatur von 45°C, durchgeführt wird in Gegenwart von:
. einer Endopeptidase, ausgewählt aus der Gruppe bestehend aus einer Neutrase, Pancreatin, Delvolase oder alkalischer Protease von *Bacillus licheniformis,* Papain oder Protease V100 und einer neutralen Pilzprotease der Gattung *Aspergillus (niger, oryzae, sojae, melleus, wentii)*;
. einer Exopeptidase der Gattung Aspergillus *(niger, oryzae, sojae, melleus* oder *wentii);*
. einem Molekül, das in der Lage ist, Disulfidbrücken zu spalten, ausgewählt aus der Gruppe bestehend aus Natriumdisulfit, Cystein oder einem gluthathionreichen Hefeextrakt.

7. Verfahren gemäß einem der Ansprüche 1 bis 6, **dadurch gekennzeichnet, dass** Temperatur und Dauer von Schritt e) vorteilhaft 90°C und 30 Minuten betragen.

8. Verfahren gemäß einem der Ansprüche 1 bis 7, **dadurch gekennzeichnet, dass** es einen zusätzlichen Konzentrationsschritt f) für die in Schritt e) erhaltene modifizierte Molke umfasst, um ein Konzentrat mit 50-60%, vorzugsweise 55% Trockenextrakt zu erhalten.

9. Modifizierte Molke, erhältlich mit Hilfe eines Verfahrens gemäß einem der Ansprüche 1 bis 8, **dadurch gekennzeichnet, dass** sie eine Lactosemenge zwischen 10 und 50 Gew.-% der anfangs vorliegenden Gewichtsmenge und eine Gesamtproteinmenge, die höchstens 80 Gew.-% der Gewichtsmenge der anfangs vorliegenden Proteine darstellt, umfasst.

10. Modifizierte Molke gemäß Anspruch 9, **dadurch gekennzeichnet, dass** sie in flüssiger Form, in Konzentratform oder in Form eines Trockenpulvers vorliegt.

11. Modifizierte Molke gemäß Anspruch 9 oder Anspruch 10, **dadurch gekennzeichnet, dass** sie in Konzentratform mit 50-70% Trockenextrakt vorliegt.

12. Modifizierte Molke gemäß einem der Ansprüche 9 bis 11, **dadurch gekennzeichnet, dass** sie eine Lactosemenge von 35 Gew.-% der in der nicht-modifizierten Ausgangsmolke vorliegenden Anfangslactose umfasst.

13. Verwendung der modifizierten Molke gemäß einem der Ansprüche 9 bis 12 als Verbesserungsmittel zur Brotbereitung.

14. Verwendung einer modifizierten Molke gemäß einem der Ansprüche 9 bis 12 zur Herstellung eines Brotteigs, der eine bessere Glättung aufweist.

15. Verwendung einer modifizierten Molke gemäß einem der Ansprüche 9 bis 12 zur Herstellung eines Brotproduktes, das eine bessere Weichheit aufweist.

16. Verwendung einer modifizierten Molke gemäß einem der Ansprüche 9 bis 12 zur Herstellung eines Brotproduktes, das eine bessere Fähigkeit zur Wasserretention aufweist.

17. Industrielles Brotprodukt umfassend die modifizierte Molke gemäß einem der Ansprüche 9 bis 12 in einer Menge von 0,1 bis 0,6 Gew.-%, bezogen auf die Menge an Mehl.

18. Brotprodukt gemäß Anspruch 17, **dadurch gekennzeichnet, dass** es zusätzlich wenigstens einen der folgenden Zusätze umfasst: Lupinenmehl, Amylase oder jedes Produkt, das aus der Fraktionierung von Milchfett stammt, insbesondere Cholesterin oder das Retentat der Ultrafiltration von Buttermilch.

19. Brotprodukt gemäß Anspruch 17 oder Anspruch 18, **dadurch gekennzeichnet, dass** es kein weiteres Emulgiermittel umfasst.

## Claims

1. Method for preparing modified whey, **characterised in that** it comprises the following steps:
a) removal of lactose from an initial whey by evaporating the whey, so as to crystallise the lactose and to obtain concentrated whey comprising from 55 to 70% dry matter,
b) hydrolysis of the whey obtained in step a) with the aid of lactases, preferably at a pH comprised between 3 and 7 and at a temperature ≤ 40°C, until a lactose level comprised between 10 and 50% by weight of the quantity of lactose initially present in the unmodified initial whey is obtained,
c) pre-treatment of the proteins contained in the whey obtained in step b) by adding a calcium trap to said whey, in the hot state and at a substantially neutral pH,
d) hydrolysis, in the hot state, of the proteins pre-treated in step c) in the presence of at least one endopeptidase, at least one exopeptidase and at least one molecule capable of cutting the disulfide bridges until a level of total proteins representing at most 80% by weight of the initial weight of proteins present in the initial unmodified whey is obtained, and
e) deactivation of all the enzymes present in the whey obtained in step d).

2. Method according to Claim 1, **characterised in that** the hydrolysis according to step b) is carried out, preferably at 37°C, in the presence of an acid lactase that has optimum activity at a pH comprised between 3 and 5, preferably at a pH of 4, or of a neutral lactase that has optimum activity at a pH comprised between 5 and 7, preferably at a pH of 6.3.

3. Method according to Claim 2, **characterised in that** the quantity of lactase is from 0.1 to 0.5 g per 100 g of dry matter.

4. Method according to any one of Claims 1 to 3, **characterised in that** the pre-treatment of the proteins according to step c) is preferably carried out at a temperature comprised between 40°C and 50°C and at a pH comprised between 6.5 and 7.5, preferably at pH 7.

5. Method according to any one of Claims 1 to 4, **characterised in that** the calcium trap according to step c), preferably present in a quantity of 1% dry extract, is selected from the group constituted by disodium citrate, sodium lactate and certain polyphosphates.

6. Method according to any one of Claims 1 to 5, **characterised in that** the hydrolysis of the proteins according to step d) is advantageously carried out at a temperature comprised between 35°C and 60°C, preferably 45°C, in the presence of:
· an endopeptidase selected from the group constituted by a neutrase, pancreatin, delvolase or alkaline protease derived from *Bacillus licheniformis,* papain or protease V100 and a fungal neutral protease of the genus *Aspergillus (niger, oryzae, sojae, melleus* or *wentii*).
· an exopeptidase of the genus *Aspergillus (niger, oryzae, sojae, melleus* or *wentii)*.
· a molecule capable of cutting the disulfide bridges, selected from the group constituted by sodium metabisulfite, cysteine or a glutathione-rich yeast extract.

7. Method according to any one of Claims 1 to 6, **characterised in that** the temperature and duration of step e) are advantageously 90°C for 30 minutes.

8. Method according to any one of Claims 1 to 7, **characterised in that** it comprises an additional step f) of concentrating the modified whey obtained in step e) in order to obtain a concentrate with 50-60% dry extract, preferably 55%.

9. Modified whey capable of being obtained by means of a method according to any one of Claims 1 to 8, **characterised in that** it comprises a quantity of lactose comprised between 10 and 50% by weight of the quantity by weight initially present and a quantity of total proteins representing at most 80% by weight of the quantity by weight of proteins initially present.

10. Modified whey according to Claim 9, **characterised in that** it is present in liquid form, in the form of a concentrate or a dry powder.

11. Modified whey according to Claim 9 or Claim 10, **characterised in that** it is present in the form of a concentrate with 50-70% dry extract.

12. Modified whey according to any one of Claims 9 to 11, **characterised in that** it comprises a quantity of lactose of 35% by weight of the initial lactose present in the unmodified initial whey.

13. Use of the modified whey according to any one of Claims 9 to 12 as a bread improver.

14. Use of a modified whey according to any one of Claims 9 to 12 for the preparation of a bread dough with improved smoothing.

15. Use of a modified whey according to any one of Claims 9 to 12 for the preparation of a bread product with improved softness.

16. Use of a modified whey according to any one of Claims 9 to 12 for the preparation of a bread product with an improved water-retaining capacity.

17. Industrial bread product comprising the modified whey according to any one of Claims 9 to 12 in a quantity from 0.1 to 0.6% by weight relative to the quantity of flour.

18. Bread product according to Claim 17, **characterised in that** it further comprises at least one of the following additives: lupin flour, amylase or any product derived from the fractionation of milk fat, for instance cholesterol or ultrafiltration retentate of buttermilk.

19. Bread product according to Claim 17 or Claim 18, **characterised in that** it is free of any other emulsifying agent.
